# EUROPEAN PATENT APPLICATION

(11) **EP 4 745 656 A1**
(43) Date of publication of application: **20.05.2026**
(21) Application number: 25210897.2
(22) Date of filing: 23.10.2025
(51) Int. Cl.: G02F 1/1333, G02F 1/13357, G02F 1/1347

(54) **DISPLAY DEVICE**

(30) Priority: 13.11.2024 CN 202411614207
(71) Applicant: InnoLux Corporation, Chu-Nan 350, Miao-Li County (TW)
(72) Inventor: PAN, Tai-Chi, 350 Chu-Nan, Miao-Li County (TW); TSAI, Yung-Fu, 350 Chu-Nan, Miao-Li County (TW)
(74) Representative: 2K Patent Partnerschaft mbB

(57) **Abstract**

A display device includes: a display panel including: a first substrate; a second substrate disposed opposite to the first substrate; and a light modulation element disposed between the first substrate and the second substrate; a backlight module disposed corresponding to the display panel, wherein the backlight module includes at least one optical film; and a support plate disposed between the display panel and the backlight module; wherein the first substrate has a first thickness, the second substrate has a second thickness, the support plate has a third thickness, and the third thickness is greater than or equal to a sum of the first thickness and the second thickness.

## Description

### CROSS-REFERENCE TO RELATED APPLICATIONS

This application claims the benefits of the Chinese Patent Application Serial Number 202411614207.8, filed on November 13, 2024, the subject matter of which is incorporated herein by reference.

### BACKGROUND

### Field

The present disclosure relates to a display device and, more specifically relates to a display device with a support plate.

### Description of Related Art

With the rapid advancement of manufacturing technology of liquid crystal display devices and their advantages such as lightness, thinness, power saving and low radiation, liquid crystal display devices are widely used in various electronic products such as tablet computers, notebook computers, digital cameras, digital camcorders, mobile phones, computer monitors, liquid crystal televisions and medical displays.

However, stress and strain on a display device may easily lead to deterioration of display quality such as light leakage at the dark state, resulting in defects in some display devices that have high requirements for display quality.

Therefore, it is desirable to provide a display device to solve the defects.

### SUMMARY

The present disclosure provides a display device, comprising: a display panel comprising: a first substrate; a second substrate disposed opposite to the first substrate; and a light modulation element disposed between the first substrate and the second substrate; a backlight module disposed corresponding to the display panel, wherein the backlight module comprises at least one optical film; and a support plate disposed between the display panel and the backlight module, wherein the first substrate has a first thickness, the second substrate has a second thickness, the support plate has a third thickness, and the third thickness is greater than or equal to a sum of the first thickness and the second thickness.

Other novel features of the disclosure will become more apparent from the following detailed description when taken in conjunction with the accompanying drawings.

### BRIEF DESCRIPTION OF DRAWINGS

FIG. 1A is a top schematic view of a part of a display device according to one embodiment of the present disclosure.
FIG. 1B is a cross-sectional schematic view of a part of a display device according to one embodiment of the present disclosure.
FIG. 2A is a top schematic view of a part of a display device according to one embodiment of the present disclosure.
FIG. 2B is a cross-sectional schematic view of a part of a display device according to one embodiment of the present disclosure.
FIG. 3 is a cross-sectional schematic view of a part of a display device according to one embodiment of the present disclosure.
FIG. 4 is a cross-sectional schematic view of a part of a display device according to one embodiment of the present disclosure.
FIG. 5 is a cross-sectional schematic view of a part of a display device according to one embodiment of the present disclosure.
FIG. 6 is a cross-sectional schematic view of a part of a display device according to one embodiment of the present disclosure.

### DETAILED DESCRIPTION

The following is specific embodiments to illustrate the implementation of the present disclosure. Those who are familiar with this technique can easily understand the other advantages and effects of the present disclosure from the content disclosed in the present specification. The present disclosure can also be implemented or applied by other different specific embodiments, and various details in the present specification can also be modified and changed according to different viewpoints and applications without departing from the spirit of the present disclosure.

It should be noted that, in the present specification, when a component is described to have an element, it means that the component may have one or more of the elements, and it does not mean that the component has only one of the element, except otherwise specified. Furthermore, the ordinals recited in the specification and the claims such as "first", "second" and so on are intended only to describe the elements claimed and imply or represent neither that the claimed elements have any proceeding ordinals, nor that sequence between one claimed element and another claimed element or between steps of a manufacturing method. The use of these ordinals is merely to differentiate one claimed element having a certain designation from another claimed element having the same designation.

In the specification and the appended claims of the present disclosure, certain words are used to refer to specific elements. Those skilled in the art should understand that electronic device manufacturers may refer to the same components by different names. The present specification does not intend to distinguish between elements that have the same function but have different names. In the following description and claims, words such as "comprising", "including", "containing", and "having" are open-ended words, so they should be interpreted as meaning "containing but not limited to...". Therefore, when the terms "comprising", "including", "containing" and/or "having" are used in the description of the present disclosure, they specify the existence of corresponding features, regions, steps, operations and/or components, but do not exclude the existence of one or more corresponding features, regions, steps, operations and/or components.

The terms, such as "about", "substantially", or "approximately", are generally interpreted as within 10%, 5%, 3%, 2%, 1%, or 0.5% of a given value or range. The quantity given here is an approximate quantity, that is, without specifying "about", "approximately", "substantially" and "approximately", "about", "approximately", "substantially" and "approximately" can still be implied. Furthermore, when a value is "in a range from a first value to a second value" or "in a range between a first value and a second value", the value can be the first value, the second value, or another value between the first value and the second value.

In the present specification, except otherwise specified, the terms (including technical and scientific terms) used herein have the meanings generally known by a person skilled in the art. It should be noted that, except otherwise specified, in the embodiments of the present disclosure, these terms (for example, the terms defined in the generally used dictionary) should have the meanings identical to those known in the art, the background of the present disclosure or the context of the present specification, and should not be read by an ideal or over-formal way.

In addition, relative terms such as "below" or "under" and "on", "above" or "over" may be used in the embodiments to describe the relative relationship between one element and another element in the drawings. It will be understood that if the device in the drawing was turned upside down, elements described on the "lower" side would then become elements described on the "upper" side. When a unit (for example, a layer or a region) is referred to as being "on" another unit, it can be directly on the another unit or there may be other units therebetween. Furthermore, when a unit is said to be "directly on another unit", there is no unit therebetween. Moreover, when a unit is said to be "on another unit", the two have a top-down relationship in a top view, and the unit can be disposed above or below the another unit, and the top-bottom relationship depends on the orientation of the device.

In the present disclosure, the thickness, the length, the width, or the distance and angle between elements may be measured by using an optical microscope (OM), scanning electron microscope (SEM), film thickness profiler (α-step), ellipsometer, or other suitable methods. More specifically, according to some embodiments, a scanning electron microscope can be used to obtain a cross-sectional image of the structure and measure the thickness, length, width of each element or the distance and angle between elements. Furthermore, any two values or directions used for comparison may have a certain error. If the first value is equal to the second value, it implies that there may be an error of about 10% between the first value and the second value. If the first direction is perpendicular to the second direction, the angle between the first direction and the second direction may be between 80° and 100°. If the first direction is parallel to the second direction, the angle between the first direction and the second direction may be between 0° and 10°.

The embodiments of the present disclosure can be understood in conjunction with the drawings, and the drawings of the present disclosure are also considered as a part of the disclosure. It should be understood that the drawings of the present disclosure are not drawn to scale, and in fact, the sizes of elements may be arbitrarily enlarged or reduced in order to clearly illustrate the features of the present disclosure.

The electronic device of the present disclosure may comprise, for example, a display device, a backlight device, an antenna device, a sensing device or a tiled device, but the present disclosure is not limited thereto. The electronic device may be a bendable or flexible electronic device. The display device may be a non-self-luminous display device or self-luminous display device. The antenna device may be a liquid crystal antenna device or a non-liquid crystal antenna device. The sensing device may be a sensing device that can sense capacitance, light, heat energy or ultrasonic waves. But, the present disclosure is not limited thereto. The electronic units included in the electronic device may include passive components and active components, such as capacitors, resistors, inductors, diodes, transistors, etc. The diode may comprise a light emitting diode or a photodiode. The light emitting diode may comprise, for example, an organic light emitting diode (OLED), a mini LED, a micro LED, a quantum dot LED, but the present disclosure is not limited thereto. The tiled device may, for example, include a tiled display device or a tiled antenna device, but is not limited thereto. It should be noted that the electronic device disclosed herein may be various combinations of the above devices, but is not limited thereto. The following description will take a display device as an electronic device to illustrate the present disclosure, but the present disclosure is not limited thereto.

It should be noted that the technical solutions provided in the following different embodiments can be replaced, combined or mixed with each other to form another embodiment without violating the spirit of the present disclosure.

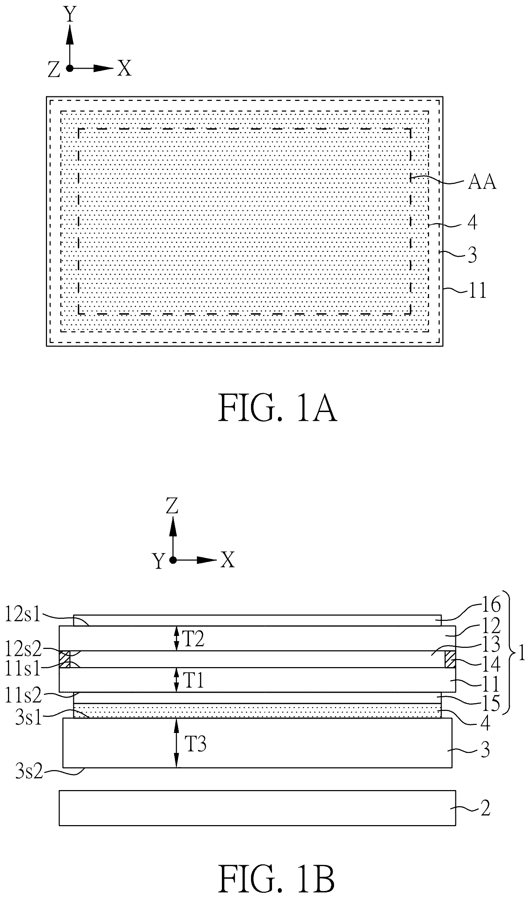

FIG. 1A is a top schematic view of a part of a display device according to one embodiment of the present disclosure. FIG. 1B is a cross-sectional schematic view of a part of a display device according to one embodiment of the present disclosure.

In one embodiment of the present disclosure, as shown in FIG. 1A and FIG. 1B, the display device may comprise: a display panel 1; a backlight module 2 disposed corresponding to the display panel 1, wherein the backlight module 2 comprises at least one optical film; and a support plate 3 disposed between the display panel 1 and the backlight module 2. The display panel 1 may comprise: a first substrate 11; a second substrate 12 disposed opposite to the first substrate 11; and a light modulation element 13 disposed between the first substrate 11 and the second substrate 12. Herein, the first substrate 11 has a first thickness T1, the second substrate 12 has a second thickness T2, the support plate 3 has a third thickness T3, and the third thickness T3 is greater than or equal to a sum of the first thickness T1 and the second thickness T2 (that is, (T1+T2) ≤ T3). In one embodiment of the present disclosure, the first substrate 11 is, for example, an array substrate, and the second substrate 12 is, for example, a color-filter substrate or a cover substrate, but the present disclosure is not limited thereto. When the relationship between the first thickness T1, the second thickness T2 and the third thickness T3 meets the above restrictions, the defects such as light leakage at the dark state and/or side-view light mixing caused by stress on the display device can be reduced, thereby improving the overall reliability of the display device and/or improving the display quality.

In one embodiment of the present disclosure, the third thickness T3 may be greater than or equal to the sum of the first thickness T1 and the second thickness T2 and less than or equal to 10 times the sum of the first thickness T1 and the second thickness T2 (that is, (T1+T2) ≤ T3 ≤ 10(T1+T2)). For example, the third thickness T3 may be greater than or equal to 1.5 times the sum of the first thickness T1 and the second thickness T2, and the third thickness T3 may be less than or equal to 8 times the sum of the first thickness T1 and the second thickness T2 (that is, 1.5(T1+T2) ≤ T3 ≤ 8(T1+T2)); or the third thickness T3 may be greater than or equal to 2 times the sum of the first thickness T1 and the second thickness T2, and the third thickness T3 may be less than or equal to 5 times the sum of the first thickness T1 and the second thickness T2 (that is, 2(T1+T2) ≤ T3 ≤ 5(T1+T2)), but the present disclosure is not limited thereto. In the present disclosure, when the relationship between the first thickness T1, the second thickness T2 and the third thickness T3 meets the above restrictions, the first thickness T1, the second thickness T2 and the third thickness T3 are not particularly limited and may be adjusted according to the requirements of the display device.

In the present disclosure, the materials of the first substrate 11 and the second substrate 12 may respectively comprise glass, quartz, sapphire, ceramics, plastic, polycarbonate (PC), polyimide (PI), polypropylene (PP), polyethylene terephthalate (PET), polymethylmethacrylate (PMMA), other suitable material of a combination thereof, but the present disclosure is not limited thereto. In the present disclosure, the "first thickness T1" refers to, for example, the distance from any point on the upper surface 11s1 of the first substrate 11 to the lower surface 11 s2 of the first substrate 11 along a top view direction Z of the display device. The "second thickness T2" refers to, for example, the distance from any point on the upper surface 12s1 of the second substrate 12 to the lower surface 12s2 of the second substrate 12 along the top view direction Z of the display device. In addition, in the present disclosure, even not shown in the figure, the first substrate 11 and the second substrate 12 may selectively include a conductive layer, an insulating layer, a conductive line, an alignment layer, an active element, other suitable elements, or a combination thereof respectively formed thereon, but the present disclosure is not limited thereto.

In the present disclosure, the light modulation element 13 may comprise a liquid crystal material, and suitable liquid crystal material may comprise, for example, polymer stabilized cholesteric textures (PSCTs), polymer-dispersed liquid crystals (PDLCs), polymer network liquid crystals (PNLCs), cholesteric texture liquid crystals, twisted nematic liquid crystals (TN LC), super twisted nematic liquid crystal (STN LCs), other suitable liquid crystal material or a combination thereof, but the present disclosure is not limited thereto.

In one embodiment of the present disclosure, as shown in FIG. 1B, a sealant 14 may be disposed between the first substrate 11 and the second substrate 12, and the sealant 14 surrounds the light modulation element 13, so that the light modulation element 13 is disposed in a space formed by the sealant 14, the first substrate 11 and the second substrate 12. In the present disclosure, the sealant 14 may be a sealing material, and suitable sealing material may comprise a thermal curing material, a photochemical curing material or a thermo-photo curing material, but the present disclosure is not limited thereto.

In one embodiment of the present disclosure, as shown in FIG. 1B, the display panel 1 may further comprise a first polarizer 15 and a second polarizer 16, wherein the first polarizer 15 is disposed between the first substrate 11 and the support plate 3, and the second polarizer 16 is disposed on the second substrate 12. In the present disclosure, even not shown in the figure, an adhesive layer may be selectively included between the first polarizer 15 and the first substrate 11, and an adhesive layer may be selectively included between the second polarizer 16 and the second substrate 12. Thus, the first polarizer 15 is fixed on the first substrate 11, and the second polarizer 16 is fixed on the second substrate 12. Thus, the error during assembly can be reduced and the process yield of display devices can be improved. In the present disclosure, the material of the adhesive layer may be, for example, glass adhesive, optical clear adhesive (OCA), optical clear resin (OCR), silicone, adhesive tape, hot melt adhesive, AB adhesive, two-component adhesive, polymer adhesive or a combination thereof, but the present disclosure is not limited thereto.

In one embodiment of the present disclosure, as shown in FIG. 1A, the display panel 1 has a display region AA, which is a region covering all the pixels. In the top view direction Z of the display device, a projection area of the support plate 3 may be greater than or equal to a projection area of the display region AA. In the present disclosure, the Young's modulus of the support plate 3 may be between 30 Gpa and 150 Gpa, for example, between 35 Gpa and 140 Gpa, between 40 Gpa and 130 Gpa or between 50 Gpa and 120 Gpa, but the present disclosure is not limited thereto. When the Young's modulus of the support plate 3 meets the aforesaid definitions, the reliability of the display device can be improved. In the present disclosure, the transmittance of the support plate 3 may be greater than or equal to 50%, and for example, greater than or equal to 60%, greater than or equal to 70% or greater than or equal to 80%, but the present disclosure is not limited thereto. When the transmittance of the support plate 3 meets the aforesaid definitions, the support plate 3 can have light-transmitting effect to reduce the influence of the support plate 3 on the light output of backlight module 2. In one embodiment of the present disclosure, the material of the support plate 3 may comprise, for example, glass, zinc oxide (ZnO), indium tin oxide (ITO) or a combination thereof, but the present disclosure is not limited thereto. The "third thickness T3" refers to, for example, a distance from any point on the upper surface 3s1 of the support plate 3 to the lower surface 3s2 of the support plate 3 along the top view direction Z of the display device.

In one embodiment of the present disclosure, as shown in FIG. 1A and FIG. 1B, the display device may further comprise an adhesive element 4 disposed between the support plate 3 and the first substrate 11, wherein the support plate 3 may be fixed on the display panel 1 through the adhesive element 4, for example, the support plate 3 may be fixed on the first polarizer 15 of the display panel 1 through the adhesive element 4, but the present disclosure is not limited thereto. In one embodiment of the present disclosure, in the top view of the display device (or in the top view direction Z of the display device), the projection area of the adhesive element 4 on the first substrate 11 may be less than or equal to the area of the first substrate 11. In one embodiment of the present disclosure, as shown in FIG. 1A and FIG. 1B, the adhesive element 4 may be, for example, coated on the entire surface. That is, in the top view of the display device (or in the top view direction Z of the display device), the area of the adhesive element 4 may be approximately equal to the area of the first polarizer 15, thus the reliability that the support plate 3 fixed on the first polarizer 15 can be improved.

In the present disclosure, the material of the adhesive element 4 may be, for example, glass adhesive, optical clear adhesive (OCA), optical clear resin (OCR), silicone, adhesive tape, hot melt adhesive, AB adhesive, two-component adhesive, polymer adhesive or a combination thereof, but the present disclosure is not limited thereto. In the present disclosure, the adhesive element 4 may be coated by any suitable method, such as dip coating, spin coating, roller coating, blade coating, spray coating, or a combination thereof, but the present disclosure is not limited thereto.

In the present disclosure, even not shown in the figure, the backlight module 2 may selectively further comprise a light source, a light guide plate, a reflector, a frame, other suitable components or a combination thereof, but the present disclosure is not limited thereto. The light source may comprise a light emitting diode, which may comprise, for example, an organic light emitting diode (OLED), a mini LED, a micro LED or a quantum dot LED (which may include a QLED or QDLED), fluorescence, phosphors, other suitable material or a combination thereof, but the present disclosure is not limited thereto. In the present disclosure, the optical film in the backlight module 2 may comprise, for example, a prism, a brightness enhancement film, a diffuser, other optical film or a combination thereof, but the present disclosure is not limited thereto.

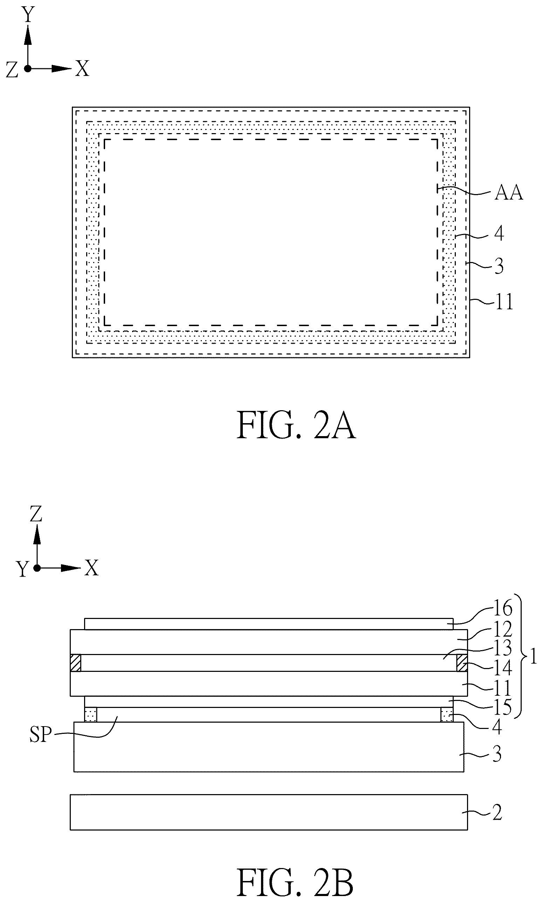

FIG. 2A is a top schematic view of a part of a display device according to one embodiment of the present disclosure. FIG. 2B is a cross-sectional schematic view of a part of a display device according to one embodiment of the present disclosure. The display device of FIG. 2A and FIG. 2B is similar to that of FIG. 1A and FIG. 1B, except for the following differences.

In one embodiment of the present disclosure, as shown in FIG. 2A and FIG. 2B, the adhesive element 4 may be applied topically, for example. More specifically, when observing from the top view direction Z of the display device, the adhesive element 4 may have a surround structure, and the support plate 3 may be fixed on the first polarizer 15 of the display panel 1 through the adhesive element 4. Thus, it can reduce the situation where the light emitted by the backlight module 2 is affected by the adhesive element 4 and the light output is reduced.

In one embodiment of the present disclosure, as shown in FIG. 2B, a space SP may be formed between the adhesive element 4, the first polarizer 15 and the support plate 3. When the adhesive element 4 has a surround structure, the space SP is sealed and may be filled with air or an inert gas material, or the space SP may be in a vacuum or near-vacuum state. In another embodiment, the adhesive element 4 does not form a closed structure, and the space SP formed between the adhesive element 4 and the first polarizer 15 and the support plate 3 may be connected to the outside and air may exist in the space SP.

In the present disclosure, other elements and materials in the display device may be as those described in FIG. 1A and FIG. 1B, and are not described again here.

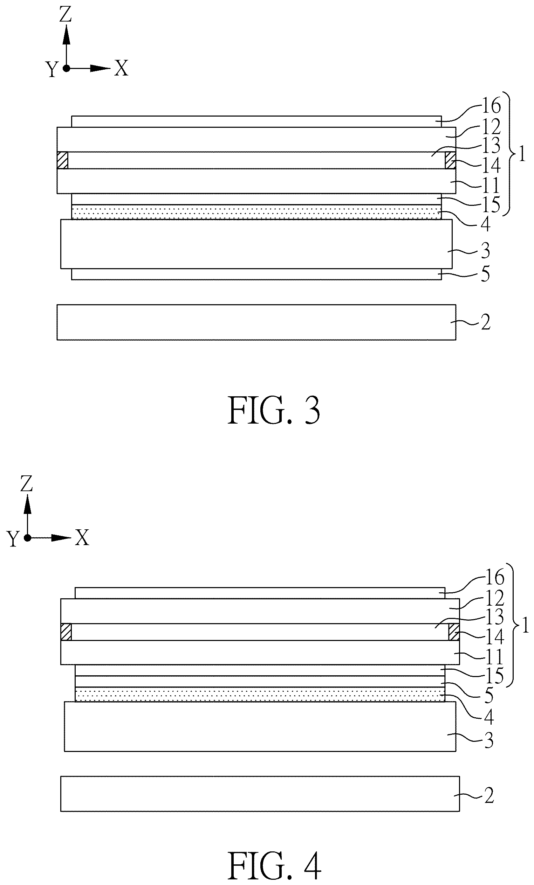

FIG. 3 is a cross-sectional schematic view of a part of a display device according to one embodiment of the present disclosure. The display device of FIG. 3 is similar to that of FIG. 1B, except for the following differences.

In one embodiment of the present disclosure, as shown in FIG. 3, the display device may further comprise an optical film 5 disposed between the backlight module 2 and the support plate 3. The optical film 5 may be a single-layer film or multi-layer film, and may comprise, for example, a dual brightness enhancement film (DBEF), an advanced polarization conversion film (APCF), other suitable optical films or a combination thereof, but the present disclosure is not limited thereto. The optical film 5 may be used to increase the light output of the display device and/or improve display quality.

In one embodiment of the present disclosure, even not shown in the figure, an adhesive layer may be selectively included between the optical film 5 and the support plate 3 to fix the optical film 5 on the support plate 3. Thus, it can reduce assembly errors and improve the process yield of the display devices. In the present disclosure, the material of the adhesive layer may be as described above, and are not described again here.

In another embodiment of the present disclosure, even not shown in the figure, the adhesive element 4 may have the surround structure shown in FIG. 2A and FIG. 2B or a non-enclosed structure not shown in the figure, but the present disclosure is not limited thereto. In addition, other elements or materials in the display device can be as those described above and are not described again here.

FIG. 4 is a cross-sectional schematic view of a part of a display device according to one embodiment of the present disclosure. The display device of FIG. 4 is similar to that of FIG. 1B, except for the following differences.

In one embodiment of the present disclosure, as shown in FIG. 4. The display device may further comprise an optical film 5 disposed between the display panel 1 and the support plate 3. More specifically, the optical film 5 may be disposed between the first polarizer 15 and the support plate 3, and the support plate 3 may be fixed on the optical film 5 through the adhesive element 4, but the present disclosure is not limited thereto. The optical film 5 may be a single-layer film or multi-layer film, and may comprise, for example, a dual brightness enhancement film (DBEF), an advanced polarization conversion film (APCF), other suitable optical film or a combination thereof, but the present disclosure is not limited thereto. The optical film 5 can be used to increase the light output of the display device and/or improve the display quality.

In one embodiment of the present disclosure, even not shown in the figure, an adhesive layer may be selectively further included between the optical film 5 and the first polarizer 15 to fix the optical film 5 on the first polarizer 15. Thus, it can reduce assembly errors and improve the process yield of display devices. In the present disclosure, the material of the adhesive layer may be as described above and are not described again here.

In another embodiment of the present disclosure, even not shown in the figure, the adhesive element 4 may also have the surround structure shown in FIG. 2A and FIG. 2B or a non-enclosed structure not shown in the figure, but the present disclosure is not limited thereto. In addition, other elements and materials of in the display device may be as described above and are not described again here.

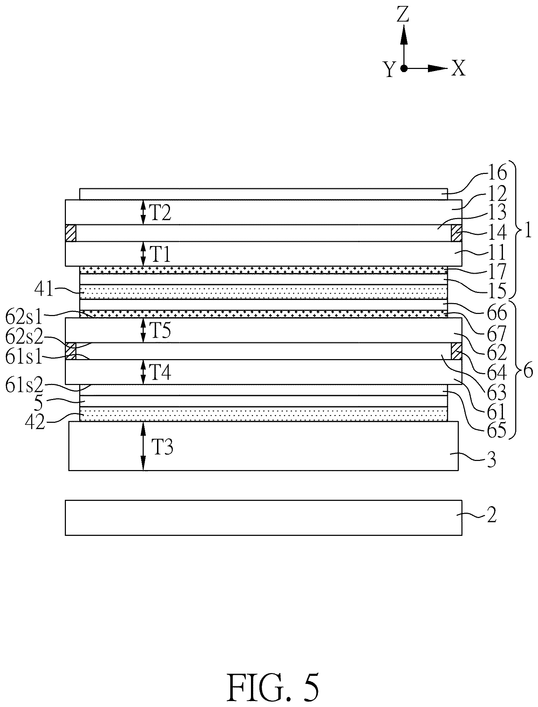

FIG. 5 is a cross-sectional schematic view of a part of a display device according to one embodiment of the present disclosure. Herein, the display device of FIG. 5 is similar to that of FIG. 1B, except for the following differences.

In one embodiment of the present disclosure, as shown in FIG. 5, the display device may further comprise another display panel 6 disposed between the display panel 1 and the support plate 3. The display panel 6 may comprise: a third substrate 61; a fourth substrate 62 disposed opposite to the third substrate 61 and between the third substrate 61 and the first substrate 11; and another light modulation element 63 disposed between the third substrate 61 and the fourth substrate 62. When the display panel 1 is used in combination with the display panel 6, the overall contrast of the display device can be improved, which is beneficial for applications such as medical displays, but the present disclosure is not limited thereto.

In the present disclosure, the material of the third substrate 61 may be the same or different from the material of the fourth substrate 62, and the materials of the third substrate 61 and the fourth substrate 62 may be respectively as that of the first substrate 11 and are not described again here. In one embodiment of the present disclosure, the third substrate 61 may be, for example, a color filter substrate, and the fourth substrate 62 may be, for example, an array substrate, but the present disclosure is not limited thereto. In addition, in the present disclosure, even not shown in the figure, the third substrate 61 and the fourth substrate 62 may selectively include a conductive layer, an insulating layer, a conductive line, an alignment layer, an active element, other suitable elements, or a combination thereof respectively formed thereon, but the present disclosure is not limited thereto. The light modulation element 63 may comprise a liquid crystal material, and the liquid crystal material in the light modulation element 63 may be the same or different from that in the light modulation element 13. Suitable liquid crystal material may be as described above and are not described again here.

In one embodiment of the present disclosure, as shown in FIG. 5, a sealant 64 may be disposed between the third substrate 61 and the fourth substrate 62, the sealant 64 surrounds the light modulation element 63 so that the light modulation element 63 is disposed in the space formed by the sealant 64, the third substrate 61 and the fourth substrate 62. In the present disclosure, the sealant 64 may be a sealing material, and suitable sealing material may be as described above and are not described again here.

In one embodiment of the present disclosure, as shown in FIG. 5, the display panel 1 comprises a first polarizer 15 and a second polarizer 16, wherein the first polarizer 15 is disposed between the first substrate 11 and the display panel 6, and the second polarizer 16 is disposed on the second substrate 12. In the present disclosure, an adhesive layer 17 may be selectively included between the first polarizer 15 and the first substrate 11, and an adhesive layer (not shown in the figure) may be included between the second polarizer 16 and the second substrate 12. Thus, the first polarizer 15 can be fixed on the first substrate 11, and the second polarizer 16 can be fixed on the second substrate 12. Similarly, the display panel 6 may comprise a third polarizer 65 and a fourth polarizer 66, wherein the third polarizer 65 is disposed between the third substrate 61 and the support plate 3, and the fourth polarizer 66 is disposed between the fourth substrate 62 and the display panel 1. In one embodiment of the present disclosure, an adhesive layer (not shown in the figure) may be selectively included between the third polarizer 65 and the third substrate 61, and an adhesive layer 67 may be selectively included between the fourth polarizer 66 and the fourth substrate 62. Thus, the third polarizer 65 can be fixed on the third substrate 61, and the fourth polarizer 66 can be fixed on the fourth substrate 62. Thus, it can reduce the error during assembly and improve the process yield of display devices. In the present disclosure, the material of the adhesive layer 17 and the adhesive layer 67 may be, for example, as described above respectively and are not described again here.

In one embodiment of the present disclosure, as shown in FIG. 5, the third substrate 61 has a fourth thickness T4, the fourth substrate 62 has a fifth thickness T5, and the third thickness T3 is greater than or equal to the sum of the fourth thickness T4 and the fifth thickness T5 (that is, (T4+T5) ≤ T3). When the relationship between the third thickness T3, the fourth thickness T4 and the fifth thickness T5 meets the aforesaid limitations, the defects such as light leakage at the dark state and/or side-view light mixing caused by stress on the display device can be reduced, thereby improving the overall reliability of the display device or improving the display quality. In one embodiment of the present disclosure, the third thickness T3 may be greater than or equal to the sum of the fourth thickness T4 and the fifth thickness T5 and less than or equal to 10 times the sum of the fourth thickness T4 and the fifth thickness T5 (that is, (T4+T5) ≤ T3 ≤ 10(T4+T5)). For example, the third thickness T3 may be greater than or equal to 1.5 times the sum of the fourth thickness T4 and the fifth thickness T5, and the third thickness T3 may be less than or equal to 8 times the sum of the fourth thickness T4 and the fifth thickness T5 (that is, 1.5(T4+T5) ≤ T3 ≤8 (T4+T5)); or the third thickness T3 may be greater than or equal to 2 times the sum of the fourth thickness T4 and the fifth thickness T5, and the third thickness T3 may be less than or equal to 5 times the sum of the fourth thickness T4 and the fifth thickness T5 (that is, 2(T4+T5) ≤ T3 ≤ 5(T4+T5)), but the present disclosure is not limited thereto. In the present disclosure, when the relationship between the third thickness T3, the fourth thickness T4 and the fifth thickness T5 meets the aforesaid limitations, the third thickness T3, the fourth thickness T4 and the fifth thickness T5 are not particularly limited and may be adjusted according to the display device. The "fourth thickness T4" refers to, for example, the distance from any point of the upper surface 61s1 of the third substrate 61 to the lower surface 61s2 of the third substrate 61 along the top view direction Z of the display device. The "fifth thickness T5" refers to, for example, a distance from any point on the upper surface 62s1 of the fourth substrate 62 to the lower surface 62s2 of the fourth substrate 62 along the top view direction Z of the display device.

In another embodiment of the present disclosure, as shown in FIG. 5, the third thickness T3 may be greater than or equal to the sum of the larger of the second thickness T2 and fourth thickness T4 and the larger of the first thickness T1 and the fifth thickness T5. In one embodiment, if the second thickness T2 is greater than the fourth thickness T4 and the fifth thickness T5 is greater than the first thickness T1, (T2+T5) ≤ T3. When the third thickness T3 meets the aforesaid relationship, the defects such as light leakage at the dark state and/or side-view light mixing caused by stress on the display device can be reduced, thereby improving the overall reliability of the display device or improving the display quality. In one embodiment of the present disclosure, the third thickness T3 may be greater than or equal to the sum of the larger of the second thickness T2 and the fourth thickness T4 and the larger of the first thickness T1 and the fifth thickness T5, and less than or equal to 10 times the sum of the larger of the second thickness T2 and the fourth thickness T4 and the larger of the first thickness T1 and the fifth thickness T5. In one embodiment, if the second thickness T2 is greater than the fourth thickness T4 and the fifth thickness T5 is greater than the first thickness T1, (T2+T5) ≤ T3 ≤ 10(T2+T5). Or, the third thickness T3 may be greater than or equal to 1.5 times the sum of the larger of the second thickness T2 and the fourth thickness T4 and the larger of the first thickness T1 and the fifth thickness T5, and the third thickness T3 may be less than or equal to 8 times the sum of the larger of the second thickness T2 and the fourth thickness T4 and the larger of the first thickness T1 and the fifth thickness T5. In one embodiment, if the second thickness T2 is greater than the fourth thickness T4 and the fifth thickness T5 is greater than the first thickness T1, 1.5(T2+T5) ≤ T3 ≤ 8(T2+T5). Or, the third thickness T3 may be greater than or equal to 2 times the sum of the larger of the second thickness T2 and the fourth thickness T4 and the larger of the first thickness T1 and the fifth thickness T5, and the third thickness T3 may be less than or equal to 5 times the sum of the larger of the second thickness T2 and the fourth thickness T4 and the larger of the first thickness T1 and the fifth thickness T5. In one embodiment, if the second thickness T2 is greater than the fourth thickness T4 and the fifth thickness T5 is greater than the first thickness T1, 2(T2+T5) ≤ T3 ≤ 5(T2+T5). However, the present disclosure is not limited thereto.

In one embodiment of the present disclosure, as shown in FIG. 5, the display device may comprise a first adhesive element 41 and a second adhesive element 42, the first adhesive element 41 is disposed between the display panel 1 and the display panel 6, and the second adhesive element 42 is disposed between the support plate 3 and the display panel 6 (for example, the second adhesive element 42 is disposed between the support plate 3 and the third substrate 61). In one embodiment of the present disclosure, the first adhesive layer 41 may selectively have a haze design to improve the optical defects of the display device. The display panel 1 and the display panel 6 may be fixed through the first adhesive element 41, for example, the first polarizer 15 of the display panel 1 may be fixed on the fourth polarizer 66 of the display panel 6 through the first adhesive element 41. In one embodiment of the present disclosure, in the top view of the display device (or in the top view direction Z of the display device), the projection area of the first adhesive element 41 on the first substrate 11 may be less than or equal to the area of the first substrate 11, and the projection area of the second adhesive element 42 on the first substrate 11 may be less than or equal to the area of the first substrate 11. In one embodiment of the present disclosure, the first adhesive element 41 and the second adhesive element 42 may be respectively coated on the entire surface, for example, as shown in the adhesive element 4 of FIG. 1A. That is, in the top view of the display device (or, in the top view direction Z of the display device), the area of the first adhesive element 41 and the second adhesive element 42 may be approximately equal to the area of the first polarizer 15 respectively to improve the reliability. In one embodiment of the present disclosure, the first adhesive element 41 and the second adhesive element 42 may be respectively coated topically, for example, as shown in the adhesive element 4 of FIG. 2A. That is, when observing from the top view direction Z of the display device, the first adhesive element 41 and the second adhesive element 42 may have a surround structure or a non-enclosed structure, and the details may be referred to those shown in FIG. 2A and FIG. 2B, which are not described again here.

In the present disclosure, the materials of the first adhesive element 41 and the second adhesive element 42 may be as that of the adhesive element 4 respectively, and are not described again here. In the present disclosure, any suitable method may be used to apply the first adhesive element 41 and the second adhesive element 42, and suitable method may be, for example, dip coating, spin coating, roller coating, doctor blade coating, spray coating or a combination thereof, but the present disclosure is not limited thereto.

In one embodiment of the present disclosure, as shown in FIG. 5, the display device may further comprise an optical film 5 disposed between the display panel 6 and the support plate 3. More specifically, the optical film 5 may be disposed between the third polarizer 65 and the support plate 3, and the support plate 3 may be fixed on the optical film 5 through the second adhesive element 42, but the present disclosure is not limited thereto. The optical film 5 may be a single layer or multilayer film, and may comprise, for example, a dual brightness enhancement film (DBEF), an advanced polarization conversion film (APCF), other suitable optical films or a combination thereof, but the present disclosure is not limited thereto. The optical film 5 may be used to increase the light output of the display device and/or improve the display quality. In one embodiment of the present disclosure, even not shown in the figure, the display device may also be not disposed with the optical film 5, and the support plate 3 may be fixed on the display panel 6 directly through the second adhesive element 42, but the present disclosure is not limited thereto.

In the present disclosure, other elements and materials of the display device may be as described in FIG. 1A and FIG. 1B, and are not described again here.

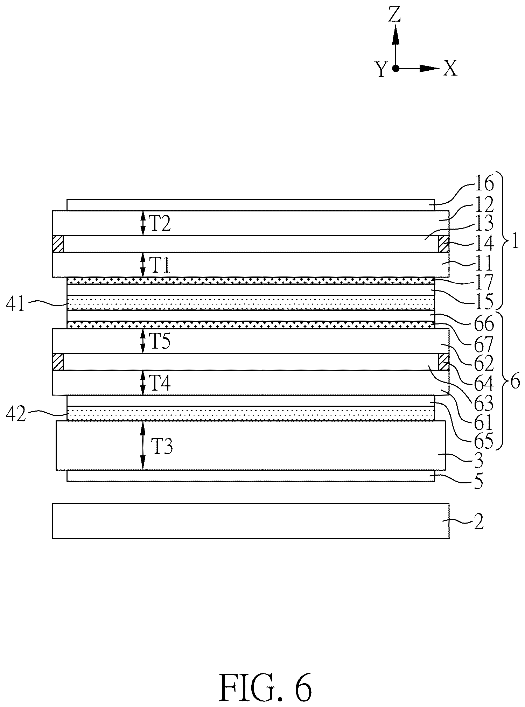

FIG. 6 is a cross-sectional schematic view of a part of a display device according to one embodiment of the present disclosure. The display device of FIG. 6 is similar to that of FIG. 5, except for the following differences.

In one embodiment of the present disclosure, as shown in FIG. 6, the support plate 3 may be fixed on the display panel 6 through the second adhesive element 42. For example, the support plate 3 may be fixed on the third polarizer 65 of the display panel 6 through the second adhesive element 42. In one embodiment of the present disclosure, as shown in FIG. 6, the optical film 5 may be disposed between the backlight module 2 and the support plate 3. In one embodiment of the present disclosure, even not shown in the figure, an adhesive layer may be selectively further included between the optical film 5 and the support plate 3, so that the optical film 5 may be fixed on the support plate 3. Thus, it can reduce assembly errors and improve the process yield of display devices. In one embodiment of the present disclosure, even not shown in the figure, the display device may not be disposed with the optical film 5, but the present disclosure is not limited thereto.

In the present disclosure, other elements and materials of the display device can be referred to those described above and are not described again here.

In the present disclosure, by providing the support plate 3, the defects such as light leakage at the dark state and/or side-view light mixing caused by stress on the display device can be reduced, thereby improving the overall reliability of the display device and/or improving the display quality. In the present disclosure, the display device can be, for example, a display, a medical display, a mobile phone, a notebook computer, a video camera, a camera, a music player, a mobile navigation device, a television or an electronic device that needs to display images, but the present disclosure is not limited thereto.

The above specific embodiments should be construed as merely illustrative and not limiting in any way the remainder of the present disclosure.

Although the present disclosure has been explained in relation to its embodiment, it is to be understood that many other possible modifications and variations can be made without departing from the spirit and scope of the disclosure as hereinafter claimed.

## Claims

1. A display device, comprising:
a display panel (1) comprising:
a first substrate (11);
a second substrate (12) disposed opposite to the first substrate (11); and
a light modulation element (13) disposed between the first substrate (11) and the second substrate (12);
a backlight module (2) disposed corresponding to the display panel (1), wherein the backlight module (2) comprises at least one optical film; and
a support plate (3) disposed between the display panel (1) and the backlight module (2),
wherein the first substrate (11) has a first thickness (T1), the second substrate (12) has a second thickness (T2), the support plate (3) has a third thickness (T3), and the third thickness (T3) is greater than or equal to a sum of the first thickness (T1) and the second thickness (T2).

2. The display device of claim 1, wherein the third thickness (T3) is less than or equal to 10 times the sum of the first thickness (T1) and the second thickness (T2).

3. The display device of claim 1, wherein the third thickness (T3) is greater than or equal to 1.5 times the sum of the first thickness (T1) and the second thickness (T2), and the third thickness (T3) is less than or equal to 8 times the sum of the first thickness (T1) and the second thickness (T2).

4. The display device of claim 1, wherein the third thickness (T3) is greater than or equal to 2 times the sum of the first thickness (T1) and the second thickness (T2), and the third thickness (T3) is less than or equal to 5 times the sum of the first thickness (T1) and the second thickness (T2).

5. The display device of claim 1, further comprising an adhesive element (4) disposed between the support plate (3) and the first substrate (11), wherein the support plate (3) is fixed on the display panel (1) through the adhesive element (4).

6. The display device of claim 5, wherein a projection area of the adhesive element (4) on the first substrate (11) is less than or equal to an area of the first substrate (11) in a top view of the display device.

7. The display device of claim 1, wherein a Young's modulus of the support plate (3) is between 30 Gpa and 150 Gpa.

8. The display device of claim 1, wherein the display panel (1) further comprises a first polarizer (15) and a second polarizer (16), the first polarizer (15) is disposed between the first substrate (11) and the support plate (3), and the second polarizer (16) is disposed on the second substrate (12).

9. The display device of claim 1, further comprising:
another display panel (6) disposed between the display panel (1) and the support plate (3) and comprising:
a third substrate (61);
a fourth substrate (62) disposed opposite to the third substrate (61), wherein the fourth substrate (62) is disposed between the first substrate (11) and the third substrate (61); and
another light modulation element (63) disposed between the third substrate (61) and the fourth substrate (62).

10. The display device of claim 9, further comprising a first adhesive element (41) and a second adhesive element (42), wherein the first adhesive element (41) is disposed between the display panel (1) and the another display panel (6), and the second adhesive element (42) is disposed between the support plate (3) and the third substrate (61).

11. The display device of claim 9, wherein the another display panel (6) comprises a third polarizer (65) and a fourth polarizer (66), wherein the third polarizer (65) is disposed between the third substrate (61) and the support plate (3), and the fourth polarizer (66) is disposed between the fourth substrate (62) and the display panel (1).

12. The display device of claim 9, wherein the third substrate (61) has a fourth thickness (T4), the fourth substrate (62) has a fifth thickness (T5), and the third thickness (T3) is greater than or equal to the sum of the fourth thickness (T4) and the fifth thickness (T5).

13. The display device of claim 12, wherein the third thickness (T3) is greater than or equal to 1.5 times the sum of the fourth thickness (T4) and the fifth thickness (T5) and less than or equal to 8 times the sum of the fourth thickness (T4) and the fifth thickness (T5).

14. The display device of claim 12, wherein the third thickness (T3) is greater than or equal to the sum of the larger of the second thickness (T2) and the fourth thickness (T4) and the larger of the first thickness (T1) and the fifth thickness (T5), and the third thickness (T3) is less than or equal to 10 times the sum of the larger of the second thickness (T2) and the fourth thickness (T4) and the larger of the first thickness (T1) and the fifth thickness (T5).

15. The display device of claim 12, wherein the third thickness (T3) is greater than or equal to 1.5 times the sum of the larger of the second thickness (T2) and the fourth thickness (T4) and the larger of the first thickness (T1) and the fifth thickness (T5), and the third thickness (T3) is less than or equal to 8 times the sum of the larger of the second thickness (T2) and the fourth thickness (T4) and the larger of the first thickness (T1) and the fifth thickness (T5).

## Amended claims

### Amended claims in accordance with Rule 137(2) EPC.

1. A display device, comprising:
a display panel (1) comprising:
a first substrate (11);
a second substrate (12) disposed opposite to the first substrate (11); and
a light modulation element (13) disposed between the first substrate (11) and the second substrate (12);
a backlight module (2) disposed corresponding to the display panel (1), wherein the backlight module (2) comprises at least one optical film;
a support plate (3) disposed between the display panel (1) and the backlight module (2) ; and
an adhesive element (4) disposed between the support plate (3) and the first substrate (11), wherein the support plate (3) is fixed on the display panel (1) through the adhesive element (4),
wherein the first substrate (11) has a first thickness (T1), the second substrate (12) has a second thickness (T2), the support plate (3) has a third thickness (T3), and the third thickness (T3) is greater than or equal to a sum of the first thickness (T1) and the second thickness (T2) ;
wherein the third thickness (T3) is greater than or equal to 1.5 times the sum of the first thickness (T1) and the second thickness (T2), and the third thickness (T3) is less than or equal to 8 times the sum of the first thickness (T1) and the second thickness (T2).

2. The display device of claim 1, wherein the third thickness (T3) is less than or equal to 10 times the sum of the first thickness (T1) and the second thickness (T2).

3. The display device of claim 1, wherein the third thickness (T3) is greater than or equal to 2 times the sum of the first thickness (T1) and the second thickness (T2), and the third thickness (T3) is less than or equal to 5 times the sum of the first thickness (T1) and the second thickness (T2).

4. The display device of claim 1, wherein a projection area of the adhesive element (4) on the first substrate (11) is less than or equal to an area of the first substrate (11) in a top view of the display device.

5. The display device of claim 1, wherein a Young's modulus of the support plate (3) is between 30 Gpa and 150 Gpa.

6. The display device of claim 1, wherein the display panel (1) further comprises a first polarizer (15) and a second polarizer (16), the first polarizer (15) is disposed between the first substrate (11) and the support plate (3), and the second polarizer (16) is disposed on the second substrate (12).

7. The display device of claim 1, further comprising:
another display panel (6) disposed between the display panel (1) and the support plate (3) and comprising:
a third substrate (61);
a fourth substrate (62) disposed opposite to the third substrate (61), wherein the fourth substrate (62) is disposed between the first substrate (11) and the third substrate (61); and
another light modulation element (63) disposed between the third substrate (61) and the fourth substrate (62).

8. The display device of claim 9, further comprising a first adhesive element (41) and a second adhesive element (42), wherein the first adhesive element (41) is disposed between the display panel (1) and the another display panel (6), and the second adhesive element (42) is disposed between the support plate (3) and the third substrate (61).

9. The display device of claim 9, wherein the another display panel (6) comprises a third polarizer (65) and a fourth polarizer (66), wherein the third polarizer (65) is disposed between the third substrate (61) and the support plate (3), and the fourth polarizer (66) is disposed between the fourth substrate (62) and the display panel (1).

10. The display device of claim 9, wherein the third substrate (61) has a fourth thickness (T4), the fourth substrate (62) has a fifth thickness (T5), and the third thickness (T3) is greater than or equal to the sum of the fourth thickness (T4) and the fifth thickness (T5).

11. The display device of claim 12, wherein the third thickness (T3) is greater than or equal to 1.5 times the sum of the fourth thickness (T4) and the fifth thickness (T5) and less than or equal to 8 times the sum of the fourth thickness (T4) and the fifth thickness (T5).

12. The display device of claim 12, wherein the third thickness (T3) is greater than or equal to the sum of the larger of the second thickness (T2) and the fourth thickness (T4) and the larger of the first thickness (T1) and the fifth thickness (T5), and the third thickness (T3) is less than or equal to 10 times the sum of the larger of the second thickness (T2) and the fourth thickness (T4) and the larger of the first thickness (T1) and the fifth thickness (T5).

13. The display device of claim 12, wherein the third thickness (T3) is greater than or equal to 1.5 times the sum of the larger of the second thickness (T2) and the fourth thickness (T4) and the larger of the first thickness (T1) and the fifth thickness (T5), and the third thickness (T3) is less than or equal to 8 times the sum of the larger of the second thickness (T2) and the fourth thickness (T4) and the larger of the first thickness (T1) and the fifth thickness (T5).
